# EUROPEAN PATENT APPLICATION

(11) **EP 2 852 195 A1**
(43) Date of publication of application: **25.03.2015**
(21) Application number: 13790311.8
(22) Date of filing: 14.05.2013
(51) Int. Cl.: H04W 4/22, H04W 72/10, H04W 74/08

(54) **MOBILE STATION**

(30) Priority: 14.05.2012 JP 2012110610; 29.06.2012 JP 2012147252
(71) Applicant: NTT DOCOMO, INC., Chiyoda-ku Tokyo 100-6150 (JP)
(72) Inventor: TAKAHASHI, Hideaki, Tokyo 1006150 (JP); HAPSARI, Wuri Andarmawanti, Tokyo 100-6150 (JP); ABETA, Sadayuki, Tokyo 100-6150 (JP); AOYAGI, Kenichiro, Tokyo 100-6150 (JP)
(74) Representative: Hoffmann Eitle
(86) International application number: PCT/JP2013/063389
(87) International publication number: WO 2013/172333

(57) **Abstract**

To improve the probability of successfully performing transmission processing by a priority terminal and transmission processing of an emergency call even during congestion. A mobile station UE according to the present invention includes: a reception unit 21 configured to acquire an emergency random access channel resource from a radio base station eNB; a RA procedure execution unit 23 configured to perform a RA procedure by using the emergency random access channel resource when the mobile station UE is a priority terminal or when the mobile station UE transmits an emergency call; and an access control unit 22 configured to perform ACB on transmission of a signal regarding the transmission processing. The access control unit 22 is configured not to perform ACB on transmission of "RA Preamble" in a RA procedure for the mobile station UE in the DRX state to transmit an uplink signal.

## Description

### TECHNICAL FIELD

The present invention relates to a mobile station.

### BACKGROUND ART

In a mobile communication system of the LTE (Long Term Evolution), transmission of "RA Preamble" in a RA (Random Access) procedure for transmitting a signal relating to transmission processing (including location registration processing, this also applies hereinafter) such as, for example, location registration processing signaling (MO-signalling) and U-plane transmission processing signaling (MO-data) can be restricted by a mobile station UE in the RRC_IDLE state (idle state) by using a mechanism of ACB (Access Class Barring).

### PRIOR ART DOCUMENTS

### NON-PATENT DOCUMENTS

Non-patent Document 1: 3GPP TS36.300
Non-patent Document 2: 3GPP TS36.211
Non-patent Document 3: 3GPP TS36.213
Non-patent Document 4: 3GPP TS36.321
Non-patent Document 5: 3GPP TS36.331

### SUMMARY OF THE INVENTION

However, in a mobile communication system of the conventional LTE, ACB cannot be performed on a transmission of "RA Preamble" in a RA procedure performed by a mobile station UE in a RRC_CONNECTED state (connected state) and a DRX (Discontinuous Reception) state (intermittent reception state) in response to "UL data arrival", in other words, the transmission of the "RA Preamble" cannot be restricted.

Accordingly, there are problems that "RA preamble" transmitted in a RA procedure for performing transmission processing by a priority terminal or transmission processing of an emergency call during congestion collides with the above-mentioned "RA Preamble" and thereby causes failure of the RA procedure, and may cause a delay or failure of the transmission processing.

Thus, the present invention has been made in view of such circumstances and has an objective of providing a mobile station capable of improving the probability of successfully performing transmission processing by a priority terminal and transmission processing of an emergency call even during congestion.

A first feature of the present invention is summarized as a mobile station including: a reception unit configured to acquire an emergency random access channel resource from a radio base station; a random access procedure execution unit configured to perform a random access procedure by using the emergency random access channel resource when the mobile station being a priority terminal performs transmission processing or when the mobile station performs transmission processing of an emergency call; and an access control unit configured to perform access control processing on transmission of a signal regarding transmission processing. Here, the access control unit is configured not to perform the access control processing on transmission of a collision random access preamble in a random access procedure for the mobile station in an intermittent reception state to transmit an uplink signal.

### BRIEF DESCRIPTION OF THE DRAWINGS

[FIG. 1] FIG. 1 is an overall configuration diagram of a mobile communication system according to a first embodiment of the present invention.
[FIG. 2] FIG. 2 is a functional block diagram of a radio base station according to the first embodiment of the present invention.
[FIG. 3] FIG. 3 is a diagram showing an example of a format of "RadioResourceConfigCommon" transmitted by the radio base station according to the first embodiment of the present invention.
[FIG. 4] FIG. 4 is a diagram showing an example of a format of "RadioResourceConfigCommon" transmitted by the radio base station according to the first embodiment of the present invention.
[FIG. 5] FIG. 5 is a functional block diagram of a mobile station according to the first embodiment of the present invention.
[FIG. 6] FIG. 6 is a flowchart for illustrating the operation of the mobile station according to the first embodiment of the present invention.
[FIG. 7] FIG. 7 is a sequence diagram for illustrating the operation of a mobile communication system according to Modification 1 of the present invention.
[FIG. 8] FIG. 8 is a sequence diagram for illustrating the operation of a mobile communication system according to Modification 2 of the present invention.

### MODES FOR CARRYING OUT THE INVENTION

### (Mobile communication system according to the first embodiment of the present invention)

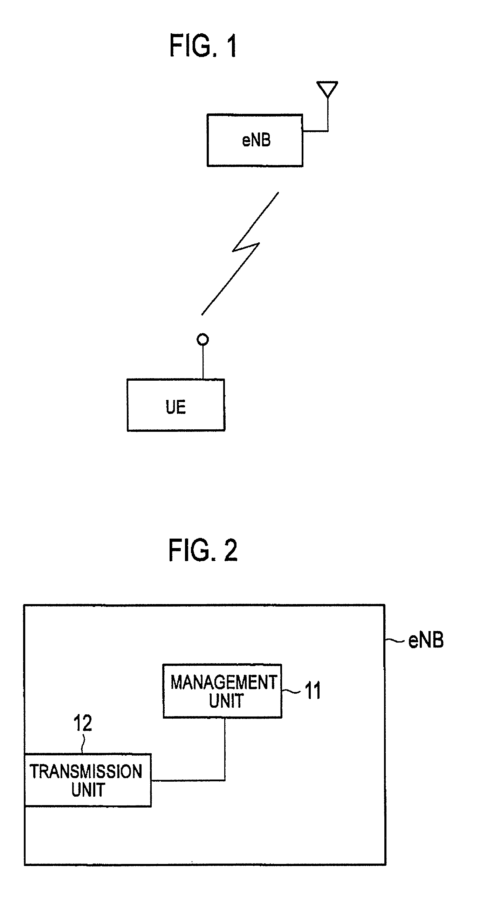

The mobile communication system according to the first embodiment of the present invention is described with reference to FIGS. 1 to 6.

The mobile communication system according to this embodiment supports the LTE scheme, and includes a radio base station eNB and a mobile station UE, as shown in FIG. 1.

As shown in FIG. 2, the radio base station eNB according to this embodiment includes a management unit 11, and a transmission unit 12.

The management unit 11 is configured to manage allocation status of a random access channel resource in a cell under control of the radio base station eNB.

For example, the management unit 11 is configured to manage allocation status of "RA Preamble" as the allocation status of the random access channel resource.

Here, the management unit 11 is configured to manage allocation status of an emergency random access channel resource, such as, for example, "RA Preamble" for emergency, in addition to the allocation status of the existing "RA Preamble".

The emergency random access channel resource is a resource used for transmission of "RA Preamble" transmitted in a RA procedure for performing transmission processing by a priority terminal or transmission processing of an emergency call by a non-priority terminal.

Here, the priority terminal means a mobile station UE having an access class (AC) of 11 to 15. The access class of each mobile station UE is configured to be set in a SIM (Subscriber Identity Module Card) of the mobile station UE.

The transmission unit 12 is configured to transmit various signals to a mobile station UE within a cell under control of the radio base station eNB.

Specifically, the transmission unit 12 is configured to notify the mobile station UE within a cell under control of the radio base station eNB of the above emergency random access channel resource.

For example, the transmission unit 12 may be configured to notify the mobile station UE of the above emergency random access channel resource via broadcast information.

Alternatively, the transmission unit 12 maybe configured to notify the mobile station UE of the above emergency random access channel resource in handover processing of the mobile station UE.

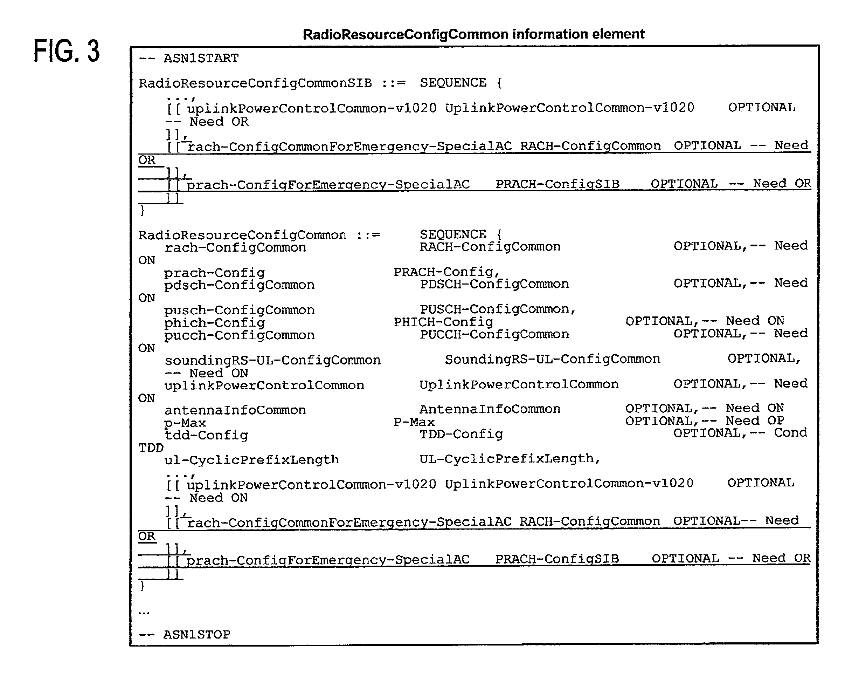

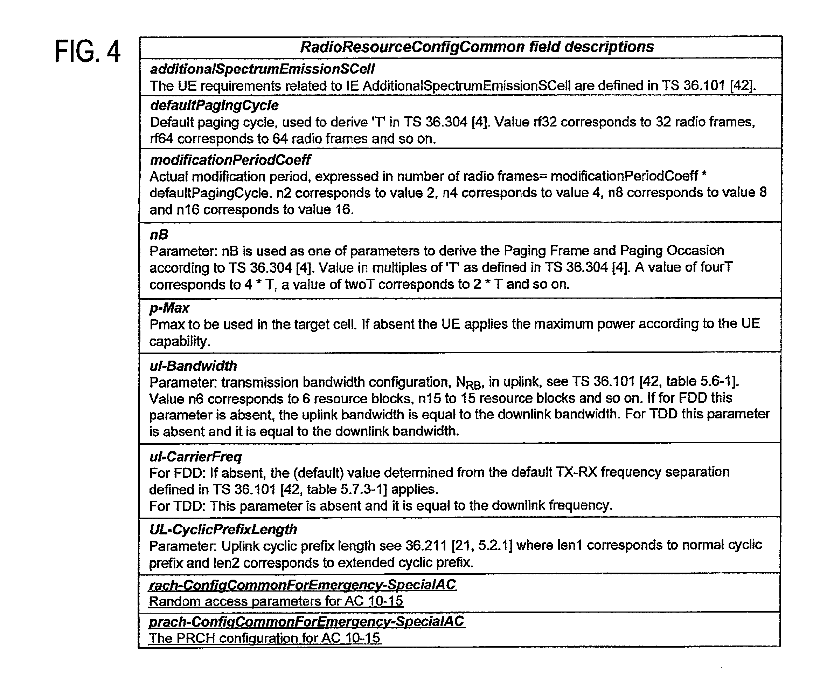

Here, as shown in FIGS. 3 and 4, the transmission unit 12 may be configured to notify the mobile station UE of the above emergency random access channel resource by "rach-ConfigCommonForEmergency-SpecialAC RACH-ConfigCommont" or "prach-ConfigForEmergency-SpecialAC PRACH-ConFIGSIB" in an information element "RadioResourceConfigCommon."

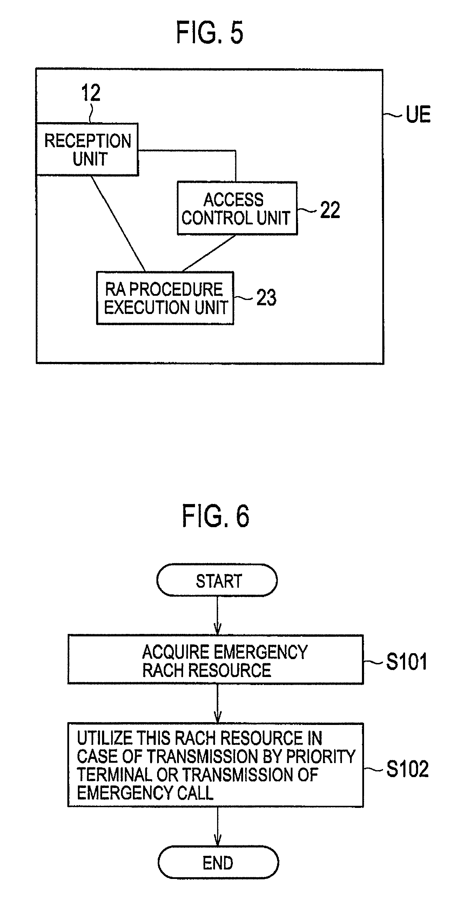

As shown in FIG. 5, the mobile station UE includes a reception unit 21, an access control unit 22, and a RA procedure execution unit 23.

The reception unit 21 is configured to receive various signals from the radio base station eNB.

For example, the reception unit 21 is configured to acquire an emergency random access channel resource from the radio base station eNB.

Here, the reception unit 21 may be configured to acquire the above emergency random access channel resource via broadcast information.

Alternatively, the reception unit 21 may be configured to acquire the emergency random access channel resource set at a handover destination radio base station T-eNB in handover processing.

Here, as shown in FIGS. 3 and 4, the reception unit 21 may be configured to receive the above emergency random access channel resource via "rach-ConfigCommonForEmergency-SpecialAC RACH-ConfigCommon" or "prach-ConfigForEmergency-SpecialAC PRACH-ConFIGSIB" in an information element "RadioResourceConfigCommon."

The access control unit 22 is configured to perform ACB (access control processing) on a signal regarding transmission processing.

For example, the access control unit 22 is configured not to perform ACB on transmission of "RA Preamble" in a RA procedure for the mobile station UE in an RRC_CONNECTED state and in a DRX state to transmit an uplink signal.

On the other hand, the access control unit 22 is configured to perform ACB on transmission of a signal regarding transmission processing from the mobile station UE in the RRC_IDLE state.

The RA procedure execution unit 23 is configured to perform a RA procedure for the mobile station UE in the RRC_CONNECTED state and in the DRX state or the mobile station UE in a RRC_IDLE state to perform transmission processing.

Here, the RA procedure execution unit 23 is configured to transmit "RA Preamble" by a contention-based method in the RA procedure.

When the mobile station UE being a priority terminal performs transmission processing or when the mobile station UE performs transmission processing of an emergency call, the RA procedure execution unit 23 is configured to transmit "RA Preamble" to perform the transmission processing by using the emergency random access channel resource acquired by the reception unit 21.

On the other hand, when another transmission processing is performed, for example, when the mobile station UE in the RRC_CONNECTED state and in the DRX state performs transmission processing, the RA procedure execution unit 23 is configured to perform a RA procedure for performing the transmission processing by using an existing random access channel resource

### ("Dedicated RA Preamble" or "Common RA Preamble.")

Hereinafter, with reference to FIG. 6, the operation of the mobile station UE according to this embodiment is described.

As shown in FIG. 6, at Step S101, the mobile station UE acquires an emergency random access channel resource from the radio base station eNB.

At Step S102, when an access class of 11 to 15 is set in a SIM of the mobile station UE, the mobile station UE executes a RA procedure for performing transmission processing by using the emergency random access channel resource.

Alternatively, at Step S102, the mobile station UE executes a RA procedure for performing transmission processing of an emergency call by using the emergency random access channel resource.

According to to an aspect of this embodiment, a RA procedure for performing transmission processing by a priority terminal and transmission processing of an emergency call can be performed by using an emergency random access channel resource which is different from a random access resource used in a RA procedure for transmission processing performed by a mobile station UE in the RRC_CONNECTED state and in the DRX state.

Accordingly, even when transmission processing by a mobile station UE in the RRC_CONNECTED state and in the DRX state occurs frequently, the probability of successfully performing transmission processing by a priority terminal and transmission processing of an emergency call can be improved.

### (Modification 1)

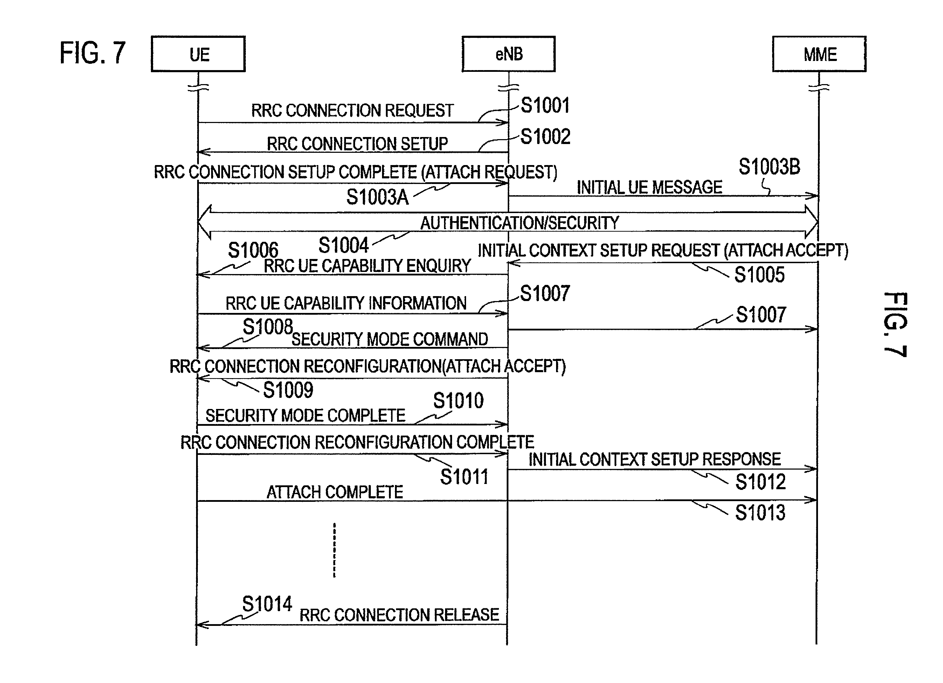

The mobile communication system according to Modification 1 of the present invention is described with reference to FIG. 7. Hereinafter, the mobile communication system according to Modification 1 of the present invention is described by focusing on differences thereof from the mobile communication system according to the first embodiment described above.

A reception unit 12 of the mobile station UE is configured to acquire the above emergency random access channel resource via individual signaling in the attachment processing.

Here, the reception unit 12 of the mobile station UE, which is a priority terminal, may be configured to acquire the above emergency random access channel resource as a dedicated resource for the mobile station UE via individual signaling in the attachment processing, and the reception unit 12 of the mobile station UE, which is a non-priority terminal, may be configured not to acquire the above emergency random access channel resource via individual signaling in the attachment processing.

Alternatively, the reception unit 12 of the mobile station UE, which is a priority terminal, and a reception unit 12 of a mobile station UE, which is a non-priority terminal, may be configured to acquire the above emergency random access channel resource as a dedicated resource for an emergency call via individual signaling in the attachment processing.

In this case, a RA procedure execution unit 23 of the mobile station UE, which is a non-priority terminal, is configured to perform the RA procedure by using the emergency random access channel resource only when performing transmission processing of an emergency call.

Further, the RA procedure execution unit 23 of the mobile station UE may be configured to release the emergency random access channel resource when shifting from "RRC_CONNECTED State (connected state)" to "RRC_IDLE State (idle state)", or to retain the emergency random access channel resource without releasing.

Hereinafter, the mobile communication system according to Modification 1 of the present invention is described with reference to FIG. 7. In an example of FIG. 7, the mobile station UE is assumed to be a priority terminal.

As shown in FIG. 7, at Step S1001, the mobile station UE transmits "RRC Connection Request" to the radio base station eNB.

Here, the mobile station UE establishes "highPriorityAccess" to an information element "Establishment cause" in the "RRC Connection Request."

At Step S1002, the radio base station eNB transmits "RRC Connection Setup" to the mobile station UE.

At Step S1003A, the mobile station UE transmits "RRC Connection Setup Complete" containing "Attach Request" to the radio base station eNB, and at Step S1003B, the radio base station eNB transmits "Initial UE Message" to a mobility management node MME (Mobility Management Entity).

At Step S1004, "Authentication/Security" processing is performed between the mobile station UE and the mobility management node MME.

At Step S1005, the mobility management node MME transmits "Initial Context Setup Request" containing "Attach Accept" to the radio base station eNB.

At Step S1006, the radio base station eNB transmits "RRC UE Capability Enquiry" to the mobile station UE.

At Step S1007, "RRC UE Capability Information" transmitted by the mobile station UE is transferred to the mobility management node MME via the radio base station eNB.

The radio base station eNB transmits "Security Mode Command" to the mobile station UE at Step S1008, and transmits "RRC Connection Reconfiguration" containing "Attach Accept" to the mobile station UE at Step S1009.

Here, if "highPriorityAccess" is established in the information element "Establishment cause" in "RRC Connection Request" received at Step S1001, the radio base station eNB may notify the mobile station UE of the above emergency random access channel resource as a dedicated resource for the mobile station UE by "RRC Connection Reconfiguration".

Alternatively, irrespective of whether "highPriorityAccess" is established or not established in the information element "Establishment cause" in "RRC Connection Request" received at Step S1001, the radio base station eNB may notify the mobile station UE of the above emergency random access channel resource as a dedicated resource for transmission processing of an emergency call.

The mobile station UE transmits "Security Mode Complete" to the radio base station eNB at Step S1010, and transmits "RRC Connection Reconfiguration Complete" to the radio base station eNB at Step S1011.

At Step S1012, the radio base station eNB transmits "Initial Conetext Setup Response" to the mobility management node MME, and the mobile station UE transmits "Attach Complete" to the mobility management node MME at Step S1013.

Then, when the mobile station UE shifts to "RRC_IDLE State" at Step S1014, the radio base station eNB may transmit "RRC Connection Release" to the mobile station UE to release the above emergency random access channel resource (dedicated resource for the mobile station UE).

### (Modification 2)

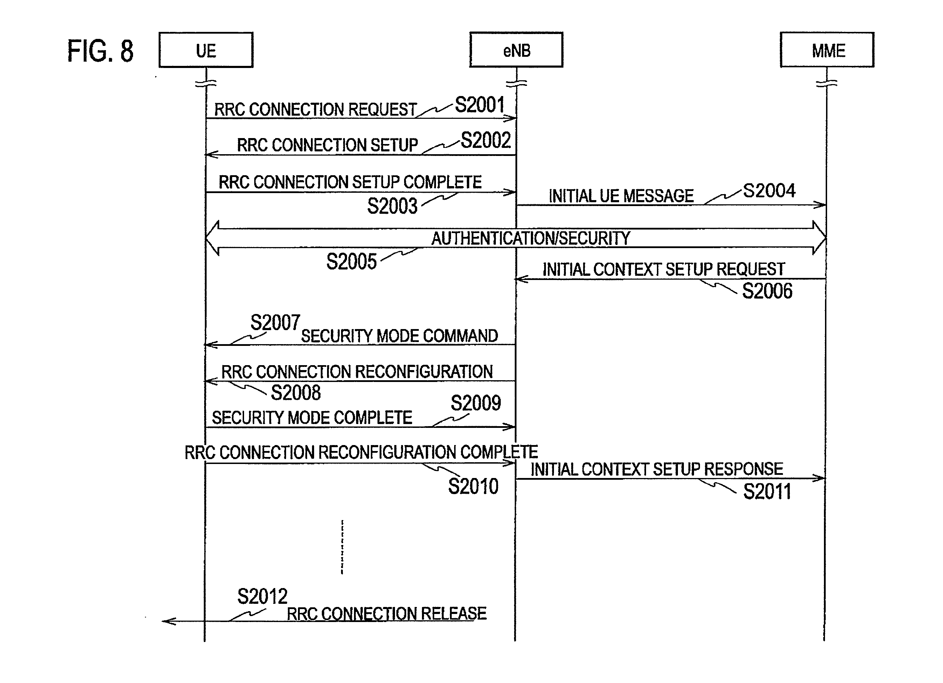

The mobile communication system according to Modification 2 of the present invention is described with reference to FIG. 8. Hereinafter, the mobile communication system according to Modification 2 of the present invention is described by focusing on differences thereof from the mobile communication systems according to the first embodiment and Modification 1 described above.

A reception unit 12 of a mobile station UE is configured to acquire the above emergency random access channel resource via individual signaling when shifting from "RRC_IDLE State" to "RRC_CONNECTED State".

Here, the reception unit 12 of the mobile station UE, which is a priority terminal, may be configured to acquire the above emergency random access channel resource as a dedicated resource for the mobile station UE via individual signaling when shifting from "RRC_IDLE State" to "RRC_CONNECTED State", and the reception unit 12 of the mobile station UE, which is a non-priority terminal, is configured not to acquire the above emergency random access channel resource via individual signaling when shifting from "RRC_IDLE State" to "RRC_CONNECTED State."

Alternatively, the reception unit 12 of the mobile station UE, which is a priority terminal, and the reception unit 12 of the mobile station UE, which is a non-priority terminal, may be configured to acquire the above emergency random access channel resource as a dedicated resource for transmission processing of an emergency call via individual signaling when shifting from "RRC_IDLE State" to "RRC_CONNECTED State."

In this case, a RA procedure execution unit 23 of the mobile station UE, which is a non-priority terminal, is configured to perform the RA procedure by using the emergency random access channel resource only when performing transmission processing of an emergency call.

The RA procedure execution unit 23 of the mobile station UE may be configured to release the emergency random access channel resource when shifting from "RRC_CONNECTED State" to "RRC_IDLE State", or to retain the emergency random access channel resource without releasing.

Hereinafter, the operation of the mobile communication system according to Modification 2 of the present invention is described with reference to FIG. 8. In an example of FIG. 8, the mobile station UE is assumed to be a priority terminal.

As shown in FIG. 8, at Step S2001, the mobile station UE transmits "RRC Connection Request" to the radio base station eNB.

Here, the mobile station UE establishes "highPriorityAccess" to an information element "Establishment cause" in the "RRC Connection Request."

At Step S2002, the radio base station eNB transmits "RRC Connection Setup" to the mobile station UE.

At Step S2003, the mobile station UE transmits "RRC Connection Setup Complete" to the radio base station eNB, and at Step S2004, the radio base station eNB transmits "Initial UE Message" to a mobility management node MME.

At Step S2005, "Authentication/Security" processing is performed between the mobile station UE and the mobility management node MME.

At Step S2006, the mobility management node MME transmits "Initial Context Setup Request" to the radio base station eNB.

The radio base station eNB transmits "Security Mode Command" to the mobile station UE at Step S2007, and transmits "RRC Connection Reconfiguration" to the mobile station UE at Step S2008.

Here, if "highPriorityAccess" is established in the information element "Establishment cause" in "RRC Connection Request" received at Step S2001, the radio base station eNB may notify the mobile station UE of the above emergency random access channel resource as a dedicated resource for the mobile station UE by "RRC Connection Reconfiguration".

Alternatively, irrespective of whether "highPriorityAccess" is established or not in the information element "Establishment cause" in "RRC Connection Request" received at Step S2001, the radio base station eNB may notify the mobile station UE of the above emergency random access channel resource as a dedicated resource for transmission processing of an emergency call.

The mobile station UE transmits "Security Mode Compete" to the radio base station eNB at Step S2009, and transmits "RRC Connection Reconfiguration Complete" to the radio base station eNB at Step S2010.

At Step S2011, the radio base station eNB transmits "Initial Context Setup Response" to the mobility management node MME.

Then, when the mobile station UE shifts to "RRC_IDLE State" at Step S2012, the radio base station eNB may transmit "RRC Connection Release" to the mobile station UE to release the above emergency random access channel resource (dedicated resource for the mobile station UE).

The features of the present invention may also be expressed as follows.

A first feature of this embodiment is summarized as a mobile station UE including: a reception unit 21 configured to acquire an emergency random access channel resource from a radio base station eNB; a RA procedure execution unit (a random access procedure execution unit) 23 configured to perform a RA procedure (a random access procedure) by using the emergency random access channel resource when the mobile station UE being a priority terminal performs transmission processing or when the mobile station UE performs transmission processing of an emergency call; and an access control unit 22 configured to perform ACB (access control processing) on transmission of a signal regarding transmission processing. Here, the access control unit 22 is configured not to perform ACB on transmission of "RA Preamble (a random access preamble) " in a RA procedure for the mobile station UE in a DRX state to transmit an uplink signal.

In the first feature of this embodiment, the reception unit 21 may be configured to acquire the emergency random access channel resource via broadcast information.

In the first feature of this embodiment, the reception unit 21 maybe configured to acquire the emergency random access channel resource set at a handover destination radio base station T-eNB in handover processing.

In the first feature of this embodiment, the reception unit 21 may be configured to acquire the emergency random access channel resource via individual signaling (for example, "RRC Connection Reconfiguration") in attachment processing.

In the first feature of this embodiment, the reception unit 21 may be configured to acquire the emergency random access channel resource via individual signaling (for example, "RRC Connection Reconfiguration") when shifting from a "RRC_IDLE State (an idle state)" to "RRC_CONNECTED State (a connected state).

It should be noted that the foregoing operations of the mobile station UE and the radio base station eNB may be implemented by hardware, may be implemented by a software module executed by a processor, or may be implemented in combination of the two.

The software module may be provided in a storage medium in any format, such as a RAM (Random Access Memory), a flash memory, a ROM (Read Only Memory), an EPROM (Erasable Programmable ROM), an EEPROM (Electronically Erasable and Programmable ROM), a register, a hard disk, a removable disk, or a CD-ROM.

The storage medium is connected to a processor so that the processor can read and write information from and to the storage medium. Instead, the storage medium may be integrated in a processor. The storage medium and the processor may be provided inside an ASIC. Such an ASIC may be provided in the mobile station UE and the radio base station eNB. Otherwise, the storage medium and the processor may be provided as discrete components inside the mobile station UE and the radio base station eNB.

Hereinabove, the present invention has been described in detail by use of the foregoing embodiments. However, it is apparent to those skilled in the art that the present invention should not be limited to the embodiments described in the specification. The present invention can be implemented as an altered or modified embodiment without departing from the spirit and scope of the present invention, which are determined by the description of the scope of claims. Therefore, the description of the specification is intended for illustrative explanation only and does not impose any limited interpretation on the present invention.

Note that the entire contents of Japanese Patent ApplicationNo. 2012-110610 (filed on May 14, 2012) and Japanese Patent Application No. 2012-147252 (filed on June 29, 2012) are incorporated by reference in the present specification.

### INDUSTRIAL APPLICABILITY

As described above, an aspect of the present invention provides a mobile station capable of improving the probability of successfully performing transmission processing by a priority terminal and transmission processing of an emergency call even during congestion.

### EXPLANATION OF THE REFERENCE NUMERALS

- UE: mobile station
- eNB: radio base station
- 11: management unit
- 12: transmission unit
- 21: reception unit
- 22: access control unit
- 23: RA procedure execution unit

## Claims

1. A mobile station comprising:
a reception unit configured to acquire an emergency random access channel resource from a radio base station;
a random access procedure execution unit configured to perform a random access procedure by using the emergency random access channel resource when the mobile station being a priority terminal performs transmission processing or when the mobile station performs transmission processing of an emergency call; and
an access control unit configured to perform access control processing on transmission of a signal regarding transmission processing, wherein
the access control unit is configured not to perform the access control processing on transmission of a random access preamble in a random access procedure for the mobile station in an intermittent reception state to transmit an uplink signal.

2. The mobile station according to claim 1, wherein the reception unit is configured to acquire the emergency random access channel resource via broadcast information.

3. The mobile station according to claim 1, wherein the reception unit is configured to acquire the emergency random access channel resource set at a handover destination radio base station in handover processing.

4. The mobile station according to claim 1, wherein the reception unit is configured to acquire the emergency random access channel resource via individual signaling in attachment processing.

5. The mobile station according to claim 1, wherein the reception unit is configured to acquire the emergency random access channel resource via individual signaling when shifting from an idle state to a connected state.
